# EUROPEAN PATENT SPECIFICATION

(11) **EP 1 201 360 B1**
(45) Date of publication and mention of the grant of the patent: **17.12.2008**
(21) Application number: 01124457.1
(22) Date of filing: 11.10.2001
(51) Int. Cl.: B24B 9/14, B24B 13/005

(54) **A method for attaching a lens holder to a spectacle lens, an apparatus therefor.**
Verfahren und Vorrichtung zum Anbringen eines Halters auf einer Brillenlinse.
Procédé et dispositif pour monter un support sur une lentille de lunettes.

(30) Priority: 31.10.2000 JP 2000332680
(43) Date of publication of application: 02.05.2002
(73) Proprietor: HOYA CORPORATION, Shinjuku-ku, Tokyo 161-8525 (JP)
(72) Inventor: Akiyama, Hisanori, c/o Hoya Corporation, Tokyo 161-8525 (JP); Jinbo, Masahiro, c/o Hoya Corporation, Tokyo 161-8525 (JP); Tanaka, Norihisa, c/o Hoya Corporation, Tokyo 161-8525 (JP); Samukawa, Masahiko, c/o Hoya Corporation, Tokyo 161-8525 (JP)
(74) Representative: Kuhnen & Wacker

(56) References cited:
- EP-A- 0 876 874
- EP-A- 0 933 163
- EP-A- 1 149 664
- US-A- 5 867 259

## Description

### Field of the Invention

The present invention relates to a method for attaching a lens holder to an uncut lens for a spectacle lens and also to an apparatus for attaching a lens holder to an uncut lens.

### Related Prior Art

From EP-A-0 933 163 A1 a method for attaching a lens holder to a progressive multi focal lens is known in order to realize a lens processing. According to this known method and apparatus a lens holding cup is attached as a processing jig to a subject lens along a reference axis, the lens and an index plate, having an index of a predetermined pattern, are illuminated by substantially parallel rays of light shaped into a diameter larger than a diameter of the lens so that an image of the lens and an image of the index are projected onto a screen. The index image projected onto the screen is then detected, whereas an entire image of the lens projected onto the screen is picked up. An optical center of the lens with respect to the reference axis is obtained on the basis of the index image detected by the detecting means, thereby displaying in a superposed manner alignment information indicating a relative position of the optical center with respect to the reference axis and the image thus picked up. The alignment is affected while observing the displayed information.

Document EP 933 163 A discloses a method for attaching a lens holder (6) to an uncut lens (LE) for a spectacle lens, the lens holder (6) being a jig which is attached to the uncut lens (LE) in advance and used as a central axis of rotation of the uncut lens in a process of grinding an edge of the uncut lens (LE) using an apparatus for processing spectacle lenses under numerical control based on processing data including data of a shape of a spectacle frame, wherein
the uncut lens (LE) is a progressive multifocal lens having a progressively changing dioptric power (paragraph 65 and figure 14);
the progressive multifocal lens has hidden marks (150,151) placed in advance at specific positions relative to a reference position in a shape of the spectacle lens, the reference position being a position which is decided in advance by a design of a layout based on a prescription and is at least a position of a geometrical center or a position of an optical center (paragraph 66 and figure 14);
the method comprises the steps of:
forming an image (LE') of the uncut lens by an apparatus for image processing (117b, 102) and deriving the positions of the hidden marks of the uncut lens by processing the formed image; and
deriving a position outside a range of a processing interference by information processing of data of the positions of the hidden marks (151) or the position of the edge of the segment (152) obtained as above, the data of the shape of the spectacle frame (120) obtained in advance and data of a shape of a lens buildup area (123) of the lens holder using a computer, deciding the derived position as a position for attaching the lens holder (6) to the uncut lens (LE) and attaching the lens holder (6) at the decided position, the range of a processing interference being a range where the processing interference takes place, i.e., a range where a portion of the shape of a lens buildup area (123) of the lens holder is outside the shape of the spectacle frame (120) and the uncut lens (LE) cannot be processed (paragraphs 65 to 69 and figures 14 and 15).

Furthermore document EP 933 163 A discloses the features of the preamble of the independent apparatus claim 5.

A spectacle glass is prepared by processing an uncut spectacle lens (in general, a so-called round lens having a circular shape) into a shape fitting the shape of a spectacle frame and fitting the cut lens into the spectacle frame. To prepare the spectacle glass, the layout must be conducted. The layout is realized by the steps of deciding the position of the optical center based on the data of the prescription on the eye of the person who wears the spectacle glass (the dioptric power, the cylindrical dioptric power, the distance between the right and left eyes and the like other data) and the data on the shape of the spectacle frame selected by the person who is to wear the spectacle glass. The layout is conducted essentially for bringing the optical center (in the case of a single vision lens) or the eye point (in the case of a multifocal lens) of the spectacle lens at the position of the pupil center of the person who is to wear the spectacle glass after it has been prepared.

In general, when a person wears a spectacle glass having a spectacle frame selected by the person, it is rather seldom that the geometrical center of the shape of the spectacle frame and the pupil center of the person are at the same position. Therefore, when an uncut lens is processed in the processing of the uncut lens into a shape fitting the shape of the spectacle frame simply in a manner such that the geometrical center of the shape formed by the processing (the shape of the spectacle frame) is brought at the position of the optical center of the lens, a problem arises in that the pupil center is not placed at the position of the optical center or the eyepoint of the spectacle lens when the spectacle glass completed by fitting the processed lens into the spectacle frame is worn. It is necessary that the optical center or the eyepoint is moved or displaced from the position of the geometrical center to a position corresponding to the position of the pupil center.

When the layout has been completed, an uncut lens (a prescribed lens) which satisfies the conditions for the above layout and the prescription for the person who is to wear the spectacle glass and is suitable for the processing is selected and processed. The processing of the uncut lens is conducted by using an apparatus for processing a lens which grinds edge portions of the uncut lens by a grinder or a cutter while the uncut lens is rotated around a specific axis approximately perpendicular to the optical face of the uncut lens. For processing the uncut lens by the apparatus for processing a lens, a lens holder which is a jig used as the rotational center axis of the uncut lens is attached to the uncut lens in advance.

Heretofore, the lens holder has been attached at the position of the optical center in the case of a single-vision lens. In the case of a progressive multifocal lens or a multifocal lens (in general, a bifocal lens), the lens holder has been attached at the position of the eyepoint of the lens. As the apparatus for attaching the lens holder at the position of the eyepoint, an apparatus described in Japanese Patent Application Laid-Open No. Heisei 11(1999)-216650 is known.

When the apparatus described in Japanese Patent Application Laid-Open No. Heisei 11(1999)-216650 is used, images of hidden marks are observed by projecting an image of an uncut lens on a screen and the position of the eyepoint is obtained from the positions of the hidden marks. Then. the position of the uncut lens is decided by moving the uncut lens so that the eye point is brought at the position of the center of a cross reticle on the screen showing the reference position of the apparatus for attaching a lens holder and the lens holder is attached at the decided position.

### Summary of the Invention

However, it is recently found that, when spectacle frames having some types of the shape are used, the uncut lens cannot be processed in accordance with the method of attaching a lens holder at the optical center. As the preference of the persons who is to wear spectacle glasses diversifies, spectacle frames having shapes having very small sizes in the vertical direction are occasionally used. When a spectacle frame has a vertical size smaller than a specific value and a lens holder is attached to the optical center, the processing interference takes place. In other words, a portion of the outer periphery of the lens holder comes outside the shape of the spectacle frame (the shape to he formed by the processing). Therefore, the processing becomes impossible.

The present invention has been made under the above circumstances and has an object of providing a method for attaching a lens holder to an uncut lens for a spectacle lens which enable efficiently obtaining the position for attaching a lens holder without the processing interference and an apparatus therefor.

The object of the invention is attained by a method for attaching a lens holder to an uncut lens according to claim 1 and by an apparatus for attaching a lens holder to an uncut lens according to claim 5. Further developments of the invention are characterized in the dependent claims.

In accordance with the present invention, it is made possible that the lens holder is surely attached at a position without the processing interference even when the spectacle frame has a shape having a very small dimension in the vertical direction. In accordance with the present invention, it is made possible that the lens holder is attached to a position without the processing interference automatically, surely and quickly.

### Brief Description of Drawings

- Fig. 1: shows a diagram describing a method for attaching a lens holder to an uncut lens for a spectacle lens as an embodiment of the present invention;
- Fig. 2: shows a diagram exhibiting the entire construction of an apparatus for attaching a lens holder to an uncut lens for a spectacle lens as an embodiment of the present invention;
- Fig. 3: shows a diagram describing a progressive multifocal lens (HR);
- Fig. 4: shows a diagram describing a multifocal lens (bifocal lens; HN);
- Fig. 5: shows a diagram describing a lens meter;

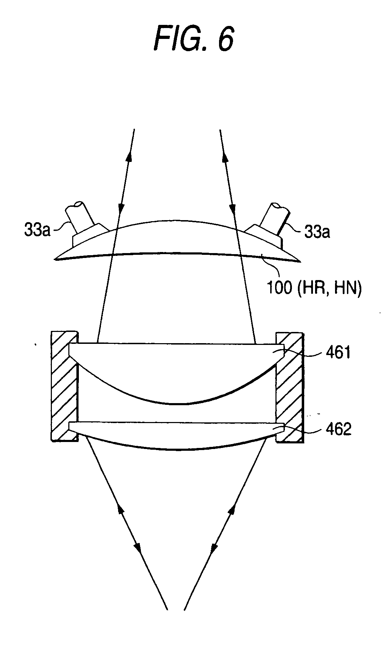

- Fig. 6: shows a partially expanded diagram describing input of an image of an uncut lens using a lens meter;
- Fig. 7: shows a diagram describing attachment of a lens holder to an uncut lens using a lens blocking apparatus; and
- Fig. 8: shows a diagram exhibiting a lens holder attached to an uncut lens.

### Description of preferred embodiments of the invention

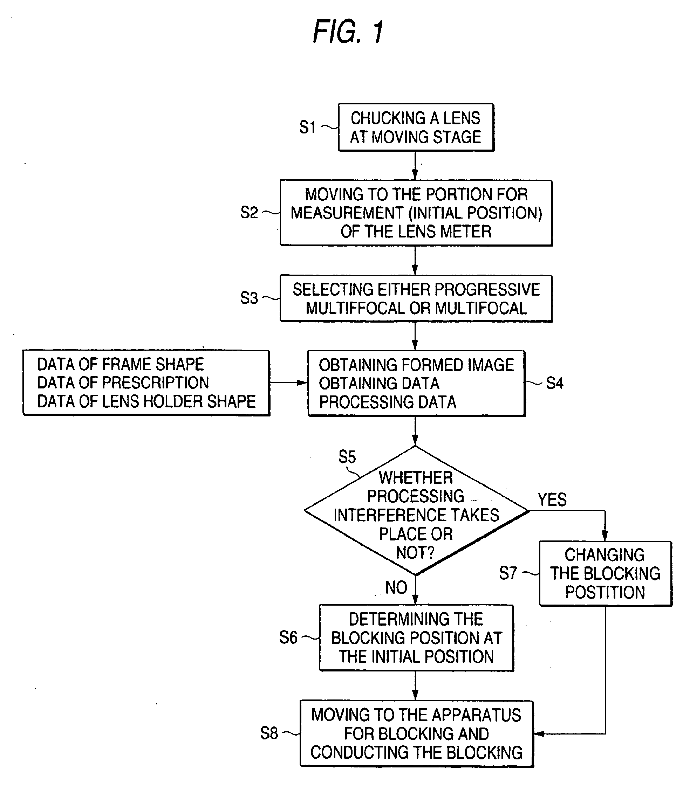

Fig. 1 shows a diagram describing a method for attaching a lens holder to an uncut lens for a spectacle lens as an embodiment of the present invention.

As shown in Fig. 1, the present embodiment of the method for attaching a lens holder to an uncut lens for a spectacle lens comprises steps S1 to S8. These steps essentially accompany movement of an uncut lens, decision of the position of the uncut lens and measurement of the position of the uncut lens with using a moving stage; measurements, formation of an image and image processing with using a lens meter; and a blocking operation with using a blocking apparatus. Therefore, the apparatus for attaching a lens holder to a spectacle lens constituted with these apparatuses and a computer will be described first and the method for attaching a lens holder to an uncut lens for a spectacle lens will be described thereafter.

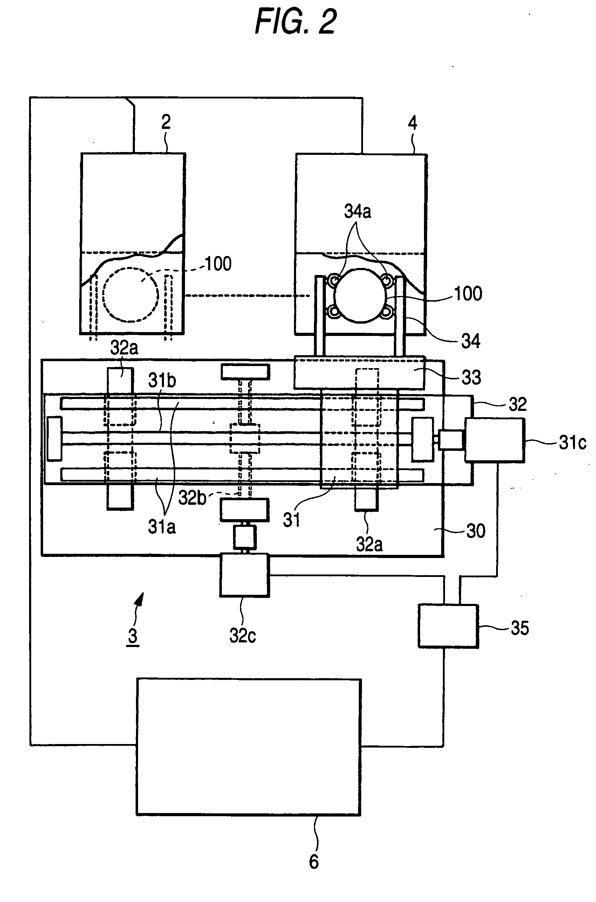

In Fig. 2, a blocking apparatus 2, a moving stage 3 and a lens meter 4 are connected to a computer 6 in a manner such that information can be exchanged with a computer 6 and necessary control and information processing can be made by the computer 6. As will be described later specifically, by the command of the computer 6, an uncut lens 100 is held by suction to sucking apparatuses 34a for holding a lens disposed in a lens holding portion 34 of the moving stage 3 and the uncut lens 100 is moved in a manner such that a specific position in the uncut 100 lens is brought exactly to the position for the measurement in the lens meter 4 or the position for the attachment in the blocking apparatus 2 and is fixed at the selected position. The information on the positions is sent to the computer 6. In the embodiment described in the following, the measurements using the lens meter 4 and the movement to the blocking apparatus are conducted while the uncut lens 100 is held by suction at the suction apparatus 34 so that quick movements can be achieved. However, it is not always necessary that the operation is conducted as described above. For the measurement using the lens meter 4, after the uncut lens is brought to a fixed position by the moving stage 3, the uncut lens may be fixed to a placing table disposed on the lens meter 4 and then temporarily released from the holding by suction. After the measurement, the uncut lens may be held by suction again and moved.

Using the lens meter 4, optical properties such as the spherical dioptric power, the cylindrical dioptric power, the degree of cylinder axis and the prism value of the uncut lens 100 such as a multifocal lens (HR) and a bifocal lens (HN) are measured, an image of the uncut lens 100 is formed and the positions of hidden marks or the position of the edge of the segment is derived by processing the formed image. Using the computer 6, the position for attaching the lens holder (the blocking position) is derived by a prescribed processing of the data of the positions, the data of the shape of the spectacle frame for the lens obtained in advance, the data of prescription (the data of the layout) and the data of the shape of the lens holder.

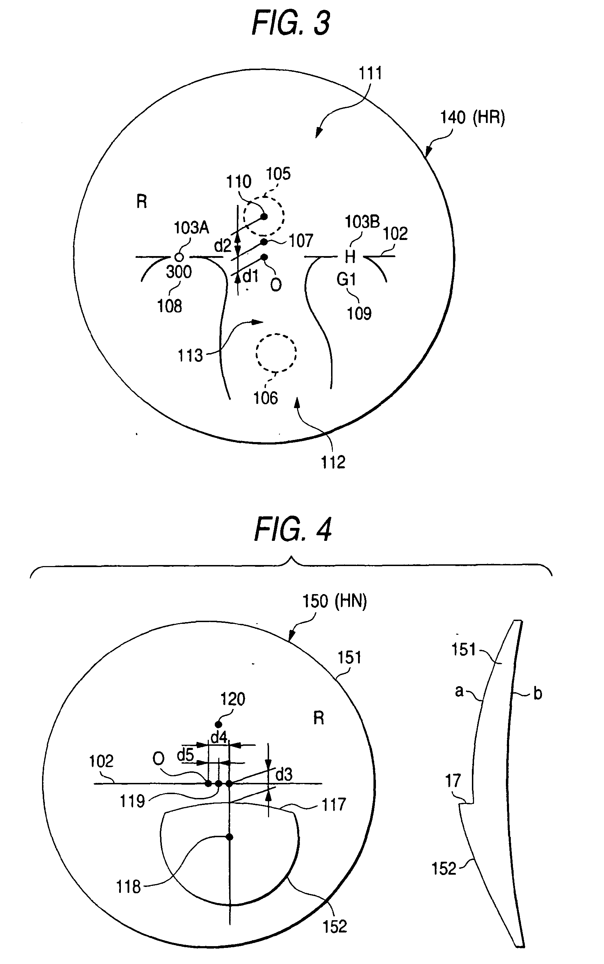

The progressive multifocal lens (HR) 140 and the bifocal lens (the multifocal lens; HN) 150 will be described with reference to Figs. 3 and 4 in the following. In Fig. 3. the progressive multifocal lens HR 140 has marks 103A and 103B, which are so-called hidden marks, exhibited at two positions separated from a geometric center O by the same distance (for example, 17 mm) on a horizontal reference line 102 which passes the geometric center O. The lens is designed in a manner such that the geometric center O, the optical center of the portion for measuring the distance dioptric power 105, the optical center of the portion for measuring the near dioptric power 106 and the position of the eyepoint 107 are obtained from the positions of the hidden marks 103A and 103B. Therefore, the portion for measuring the distance dioptric power 105 is derived from the positions of the hidden marks 103A and 103B and the dioptric power (the distance dioptric power) is measured.

The hidden marks 103A and 103B are shown by the same small circles or by a small circle and a character. Below the hidden mark, a number exhibiting the additional dioptric power 108 of the lens HR (the difference between the outer vertex power of the distance portion and the outer vertex power of the near portion) and an identification mark 109 exhibiting the type of the lens (for example, G1) are shown. The number exhibiting the additional dioptric power 108 is expressed by a number of three digits (for example, 300) below the hidden mark at the side of the ear when the spectacle glass is worn. Therefore, it can be found whether a spectacle lens is used for the left eye or the right eye from the knowledge that the number of three digits is placed below the hidden mark at the left side or the right side, respectively. The spectacle lens shown in Fig. 3 is used for the right eye. The hidden mark at the left side 103A is exhibited as a small circle "o" and the hidden mark at the right side 103B is exhibited as an alphabet "H". The hidden marks 103A and 103B, the number exhibiting the additional dioptric power 108 and the identification mark 109 are formed on the convex surface of the lens HR as minute protrusions (about 2 to 4 □ m) when the lens is produced by molding.

It is specified that the portion for measuring the distance dioptric power 105, the portion for measuring the near dioptric power 106 and the eyepoint 107 should be placed at reference positions separated from the geometric center O by specific distances although the reference positions may be different depending on the design of the lens HR. For example, the eyepoint 7 is placed at the position separated from the geometric center O by a specific distance d1 (for example, 2 mm) in the upward direction and the distance optical center 110 is placed at the position separated from the position of the eyepoint 107 by a specific distance d2 (for example, 4 mm) in the upward direction. Therefore, the positions of the geometric center O, the eyepoint 107 and the distance of the optical center 110 can be derived by forming images of hidden marks 103A and 103B and calculating the coordinates of the positions by processing the formed images. The portion 111 is a portion for seeing distant things (a distance portion), the portion 112 is a portion for seeing near things (a near portion) and the potion 113 is a portion in which the dioptric power continuously changes (a progressive portion).

In Fig. 4, the multifocal lens 150 has a main lens 151 and a segment 152 and is designed in a manner such that the positions of the geometric center O, the optical center of the portion for measuring the near dioptric powder 118 and the eyepoint 119 can be derived using the upper edge of the segment 152 as the reference mark (the edge of the segment). Therefore, the dioptric power (the distance dioptric power) is measured after finding the position of the eyepoint 119 from the position of the upper edge 117 of the segment 152.

When the lens is made of a plastic material, the segment 152 is formed in a shape protruded from the surface of the main lens 151 in a manner such that the side view shows a shape of a wedge. The upper edge 117 of the segment 152 is formed at a position separated from a horizontal reference line 102 which passes the geometric center O by a specific distance d3 (for example, 5 mm) in the downward direction. When the spectacle lens is used for the right eye, the segment 152 is formed in a manner such that the optical center 118 of the portion for measuring the near dioptric power is separated from the geometric center O by a specific distance d4 (for example, 5 mm) in the rightward direction. The eyepoint 119 is fixed at a position separated from the geometric center O by a specific distance (for example, 2.5 mm) on the horizontal reference line 102 to the side of the segment 152. Therefore, the positions of the geometric center O and the eyepoint 119 can be derived by forming an image of the segment 152, setting the upper edge 117 as the edge of the segment which is the boundary of the main lens and the segment and calculating the coordinates of the position of the center of the edge of segment by the image processing. The upper edge 117 of the segment 152 in this case corresponds to the hidden marks 103A and 103B in the case of the progressive multifocal lens HR described above. It can be found whether the spectacle glass is used for the right eye or the left eye from the knowledge that the position of the segment 152 is at the left side or the right side of the geometric center, respectively. The portion 120 is a portion for measuring the distance dioptric power. Fig. 4 shows a spectacle lens used for the right eye.

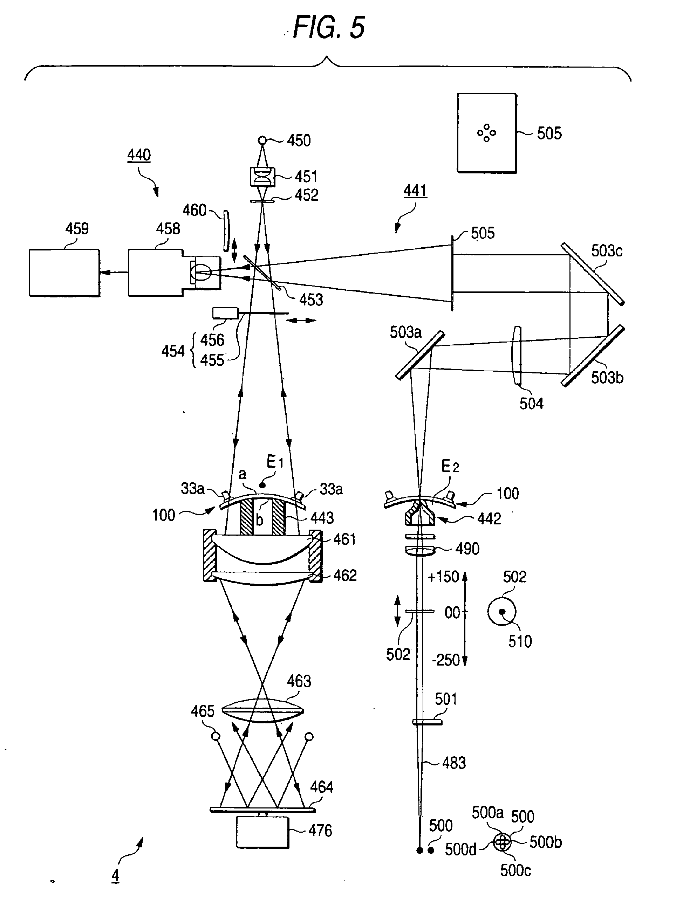

The construction of the lens meter 4 will be described with reference to Figure 5. The lens meter 4 comprises an apparatus for forming and processing an image 440 which is used for detecting the marks and calculating the position of the eyepoint, an apparatus for measuring the distance dioptic power 441 and an apparatus for measuring the height 442 which is used for measuring the height of the concave surface.

The apparatus for forming and processing an image 440 comprises a light source 450 for a progressive multifocal lens disposed above a position for detecting marks E1 and a condenser lens 451, a diaphragm 452 and a half-mirror 453 disposed in the light path between the light source 450 and the lens HR or the lens HN. The light source 450 is used for detecting marks of the progressive multifocal lens HR shown in Fig. 3. For example, an LED emitting red light having a narrow width of the wavelength is used so that sharp images of the hidden marks 103A and 103B, the number exhibiting the additional dioptric power 108 and the identification mark 109 can be derived. As the half-mirror 453, a mirror having the ratio of the transmitted light and the reflected light of 7 to 3 is used.

The apparatus for forming and processing an image 440 comprises a switching means 454, an image input device 458 such as CCD, an image forming device 459 and a lens for focus adjustment 460 which are disposed at the side of the convex surface of the lens HR or the lens HN and convergent lenses 461 and 462 fixed at a supporting cylinder 472, an image formation lens 463. a reflecting screen 464 and light sources 465.

The switching means 454 comprises a shutter 455 and a driving apparatus 456 such as an air cylinder for selectively inserting the shutter 455 into the light path between the half-mirror 453 and the apparatus for holding a lens 443 and is constructed to keep the shutter 455 outside the light path during detection of the marks and insert the shutter 455 into the light path during the measurement of the dioptric power of the lens. This means is used so that outside light from the apparatus for forming and processing an image 440 does not enter into the image input device 458 through the half-mirror 453 during the measurement of the dioptric power.

The lens for focus adjustment 460 is kept outside the light path during the detection of marks on the lens HR. During the detection of the position of the edge of the segment (the upper edge 117 of the segment 152) as the mark of the lens HN, the lens for focus adjustment 460 is inserted into the light path between the half-mirror 453 and the image input device 458 and used for focussing the image input device 458 on the convex surface **a** of the lens HN.

In Fig. 5, the image formation lens 463 comprises convex lenses. The rays of the image of the convex surface of the lens HR or the lens HN converge through the convergent lenses 461 and 462 and form an image of the convex surface of the lens HR or the lens HN having about the same size on the reflecting screen 464 through the image formation lens 463. The image formation lens 463 is used as a light transfer lens when the spectacle lens is a multifocal lens HN.

On the reflecting screen 464, a reflecting sheet having a substrate coated with fine power such as fine powder of glass and aluminum as particles for increasing the reflectivity and enhancing scattering of light is laminated. The screen is rotated at a high speed (for example, 3,400 rpm) by a motor 476 to make the lightness of the surface and the background uniform and the image of the convex surface of the lens HR or the lens HN is reflected. The contrast between the portion of the hidden marks and portions other than the hidden marks is enhanced by this procedure. The rays of the image of the convex surface of the lens HR or the lens HN formed on the reflecting screen 464 are transferred back to the convex surface **a** of the lens HR or the lens HN, respectively, via the same paths as those of the rays of the incident light, are reflected by the half-mirror 453 and form an image on the light receiving surface of the image input device 458. The image thus input is taken into the image forming device 459 and subjected to the image processing.

The light sources 465 are used for forming the image of the multifocal lens HN shown in Fig. 4. LED of red light is used as the light source. A plurality of LED, for example, eight LED's, are disposed at the same distance between each other in the circumferential direction along an outer circumference below the image formation lens 463. The rays emitted from the light sources 465 are reflected by the reflecting screen 464, pass through the image formation lens 463 and the convergent lenses 462 and 461 and then irradiate the concave surface **b** of the multifocal lens HN. The rays of the image of the convex surface of the lens HN are reflected at the half mirror 453, pass the lens for focus adjustment 460 and form an image on the image input device 458. The multifocal lens HN is irradiated with the rays from the light sources 465 on the concave surface **b** since the shadow of the upper edge 117 of the segment 152, i.e., the edge of the segment, is more clearly projected in comparison with the case in which the multifocal lens HN is irradiated on the convex surface **a**.

When, with the detection of the marks on the lens, the lens fixed by suction at the sucking apparatuses 34a turnes out to be a progressive multifocal lens HR, the light source 450 for a progressive multifocal lens is lighted and the mark is detected while the switching means 454 and the lens for focus adjustment 460 are kept outside the light path of the apparatus for forming and processing an image 440. The light sources 465 are extinguished at this time.

When the light source 450 is lighted, the rays from the light source 450 irradiate the lens HR and the rays of the image of the convex surface exhibiting the hidden marks 103A and 103B, the number exhibiting the additional dioptric power 108 and the identification mark 109 converge through the convergent lenses 461 and 462 and form an image of the convex surface of the lens HR on the reflecting screen 464 through the image formation lens 463. The rays of the image of the convex surface of the lens HR formed on the reflecting screen 464 are reflected back to the convex surface **a** of the lens HR via the same paths as those of the rays of the incident light, are reflected by the half-mirror 453 and form an image on the light receiving surface of the image input device 458. The formed image is input into the image forming device 459 and subjected to the image processing. The hidden marks 103A and 103B, the number exhibiting the additional dioptric power 108 and the identification mark 109 are detected and the positions of the hidden marks 103A and 103B are calculated.

It is found whether the lens is used for the right eye or the left eye from the position of the number exhibiting the additional dioptric power 108 and the type of the lens is detected from the identification mark 109. The positions of the geometric center O and the eyepoint 107 (Fig. 3) are obtained by calculation based on the information of the positions of the hidden marks 103A and 103B. Based on the information on the lens, the data on the shape of the spectacle frame and the data of the prescription of the person who is to wear the spectacle glasses, the center of processing and the angle of attachment of the axis line of the lens holder 20 with respect to the lens HR, which will be described later, are decided.

When the lens is the multifocal lens HN, the light sources for the multifocal lens 465 are used in place of the light source for the progressive multifocal lens 450. The lens for focus adjustment 460 is inserted into the light path between the half mirror 453 and the image input device 458 and the image input device 458 is focussed on the convex surface **a** of the lens HN. When the light sources 465 are lighted, the rays irradiate the reflecting screen 464 and are reflected. The reflected rays pass through the image formation lens 463 and projection lenses 462 and 461 and irradiate the lens HN at the concave surface **b**. The rays of the image of the upper edge 117 of the segment 152 formed on the convex surface **a** are reflected by the half mirror 453 and brought to the image input device 458. The image input into the image input device 458 is transferred to the image forming device 459 and subjected to the image processing. The upper edge 117 is detected and the position of the upper edge 117 is calculated.

Based on the information of the position of the upper edge 117, the positions of the geometric center O and of the eyepoint 119 are calculated (Fig. 4). Based on the obtained information of the lens, the data of the shape of the spectacle frame and the data of the prescription of the person who is to wear the spectacle glasses, the center of processing and the angle of attachment of the axis line of the lens holder 20 with respect to the lens HN are decided.

As described above, when the light source for the progressive multifocal lens 450 and the image input device 458 are disposed at the side of the convex surface **a** of lens HR or the lens HN and the image of the convex surface of the lens HR is formed, strain of the image due to the cylinder axis is not formed even if the lens HR has a cylindrical dioptric power, and an excellent image can be obtained by projecting the image of the convex surface of the lens HR on the reflecting screen 464 disposed at the side of the concave surface **b** and bringing the image reflected by the reflecting screen 464 back to the side of the convex surface **a** of the lens HR and then to the image input device 458. In other words, when the rays irradiate the convex surface **a**, strains are formed in the image of the surface of the convex surface with passing the lens HR due to the cylinder axis and the strained image is projected to the reflecting screen 464.

However, since the strained image returns to the side of the convex surface **a** through the lens HR after the image is reflected by the reflecting screen 464, the image is strained again by the cylinder axis. The strain in the image formed in the path to the reflecting screen 464 is cancelled due to the strain formed in the path after being reflected. Therefore, an unstrained image is formed on the light receiving surface of the image input device 458 and the image processing can be conducted by the image forming device 459 easily without complicated corrections.

When the lens is a multifocal lens HN. the light irradiates the spectacle lens at the concave surface and the image of the upper edge 117 of the segment 152 on the convex surface is directly formed in the image input device 458. The formed image does not have the strain due to the cylinder axis and an excellent image can be obtained. Therefore, the image processing can also be conducted easily in this case.

When the detection of the marks on the lens HR or the lens HN of the uncut lens 100 is completed, the uncut lens 100 is transferred to a position for measuring the height and the dioptric power E2 while the uncut lens is held by the sucking apparatuses 34a and the height of the concave surface **b** and the distance dioptric power of the lens HR or the lens HN are measured.

In Fig. 5, an apparatus for measuring the height of the concave surface **b** of the lens HR or the lens HN 442 is disposed at the position for measuring the height and the dioptric power E2. The apparatus for measuring the height 442 comprises the light source 500 which is disposed below the position for measuring the height and the dioptric power E2 and irradiates the lens HR or the lens HN at the concave surface **b**, a light transfer lens 501 which arranges the rays 483 irradiated from the light source 500 into parallel rays, a collimator lens 490 which forms the image of the light source on the concave surface **b** of the lens HN and a target 502 which is disposed between the collimator lens 490 and the light transfer lens 501 and can be moved freely in the direction of the optical axis.

Three mirrors 503a, 503b and 503c, an object lens 504 and a transmitting screen 505 are disposed at the side of the convex surface **a** of the lens HR or the lens HN. In the present embodiment, since the lens for the examination is the progressive multifocal lens NR or the multifocal lens HN described above, the distance dioptric power of the lens is measured. The range of measurement of the dioptric power of a lens by the apparatus for measuring the distance dioptic power 441 is, for example, -20D to +15D.

The light source 500 is composed of four light emitting diodes (LED) 500a to 500d of a high luminance. The light emitting diodes are arranged at apices of a square whose center is at the optical axis so that the calculation is facilitated. As the target 502, a pinhole plate having a pinhole 510 having a diameter of about 1 mm at the center is used. The image of the pinhole 510 is formed on the transmitting screen 505 as a pattern image of the target 502 by the action of the collimator lens 490 and the object lens 504.

The object lens 504 is disposed between the mirror 503a and the mirror 503b. The transmitting screen 505 is composed of a plate of a synthetic resin having a milk white color or a ground glass and disposed in a manner such that the transmitting screen 505 and the image input device 458 of the apparatus for forming and processing an image 440 face each other through the half mirror 453 placed between them.

When the distance dioptric power of the lens HR or the lens HN is measured, the lens for focus adjustment 460 is removed to the outside of the light path and the switching means 454 is inserted into the light path. The light sources 450 and 465 are switched off. The light source 500 is lighted (switched on) while the lens for the examination is not placed at the position for measuring the height and the dioptric power E2. When the light source 500 is lighted, the emitted rays 483 are arranged into parallel rays by the light transfer lens 501, irradiate the pinhole plate 502 and reach the collimator lens 490. After passing the collimator 490, the rays converge at the position of the concave surface **b** of the lens HR or the lens HN and form an image of the light source. Then, the rays become divergent again, pass the object lens 504 and irradiate the transmitting screen 505.

When the effect of the dioptric power of the spectacle lens is absent (0.00D) in the formation of the image of the pinhole 510 of the pinhole plate 502 on the transmitting screen 505, the rays of the image of the pinhole 510 of the pinhole plate 502 are arranged into parallel rays by the collimator lens 490 and the image of the pinhole 510 is formed on the transmitting screen 505 by the action of the object lens 504. In other words, when LED's 500a to 500d are each successively lighted while neither the lens HR nor the lens HN is placed at the apparatus for measuring the height 442, the light 483 passes through the light transfer lens 501, the pinhole 510 of the pinhole plate 502, the collimator lens 490, the mirror 503a, the object lens 504, the mirror 503b and the mirror 503c, successively, and the image of the pinhole is formed on the transmitting screen 505. At this time, the pinhole plate 502 is kept at the reference position so that the images of the pinhole formed by lighting LED's 500a to 500d each successively are kept approximately at the same position.

The rays of the image of the pinhole projected on the transmitting screen 505 pass through the transmitting screen 505 and the half mirror 453 and are input as an image into the image input device 458. By forming the image of the pinhole and subjecting the image to the image processing by the image forming device 459, the position of the image of the pinhole is calculated and memorized as the reference position. When the lens for the examination is placed in the passage of the light, the images of the pinhole of the pinhole plate 502 formed by lighting LED's 500a to 500d each successively are not kept approximately at the same position of the transmitting screen 505. Therefore, the lens meter has a mechanism for moving the pinhole plate 502 in the direction of the optical axis and adjusting the position of the pinhole plate so that the images are formed at approximately the same position, similarly to conventional lens meters.

When the distance dioptric power of the lens for examination is measured, the lens for examination is placed on the apparatus for measuring the height 442. Based on the information on the height of the concave surface **b** obtained by the measurement by the apparatus for measuring the height 442, the Z stage (Figure 2) is driven under control and the portion for measuring the distance dioptric power on the concave surface **b** of the lens for examination is brought to the specific reference height of the measurement. The reference height of the measurement is the position of the focus of the collimator lens 490. When the portion for the measuring the distance dioptric power on the concave surface **b** of the lens for examination is brought to the specific reference height of the measurement, the measurement of the dioptric power (the distance dioptric power) is conducted under this condition. The measurement of the dioptric power is conducted while LED's 500a to 500d are lighted each successively.

Since the light 483 from LED's 500a to 500d passes through the lens for examination, the position of the image of the pinhole formed by the light of each LED and projected on the transmitting screen 505 shifts from the reference position described above due to the prism effect which depends on the dioptric power of the lens for examination. The image of the pin hole is input into the image input device 458 and the obtained image is subjected to the image processing by the image forming device 459. The amount of the shift of the image of the pinhole is calculated with respect to each of LED's 500a to 500d. In other words, the image of the pinhole is formed at about the same position on the transmitting screen 5050 by moving and adjusting the position of the pinhole plate 502. The amount of the movement of the pinhole plate 502 is memorized by the image forming device 459 and the dioptric power of the lens HR or the lens HN is calculated by converting the amount of shift of the image of the pinhole and the amount of movement of the pinhole plate into the dioptric power. The basic method of calculation of the dioptric power is described in detail in Japanese Patent Application Laid-Open No. Heisei 2(1990)-216428 applied by the applicant of the present invention.

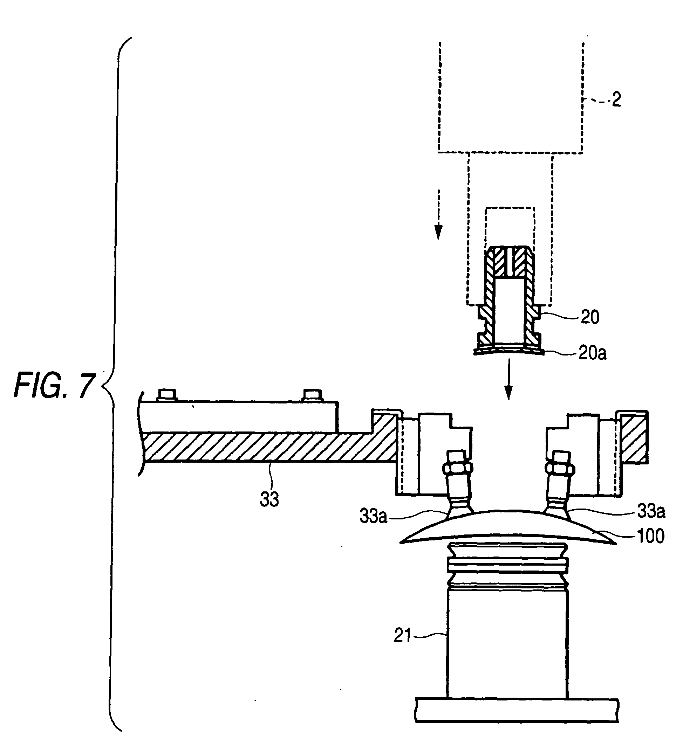

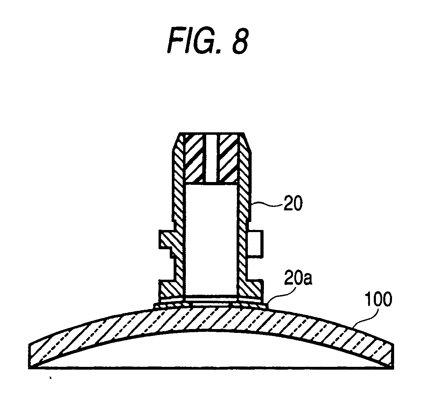

The blocking apparatus 2 will be described in the following. As shown in Figs. 7 and 8, the blocking apparatus 2 is a conventional apparatus which supports a lens holder 20 and pushes the lens holder 20 to the surface of the uncut lens 100 via an elastic seal 20a to attach the lens holder there. The uncut lens 100 is held by a portion for holding a lens 33 of the moving stage 3 and placed on a table for placing a lens 21 at a position fixed in a manner such that the central axis of the lens holder 20 is placed exactly at the position for attachment on the uncut lens 100. Then, the lens holder 20 is attached to the uncut lens.

By a command from the computer 6, the moving stage 3 holds the uncut lens 100 by suction using sucking apparatuses 34a for holding a lens which are disposed at the portion for holding a lens 34 and controls the position by moving the uncut lens and bringing specific positions on the uncut lens 100 exactly at the position of measurement of the lens meter 4 or the position of attachment of the blocking apparatus 2. The X-Y table also has the function of transmitting information on the positions to the computer 6.

The portion for holding a lens 34 is attached to a Z stage 33. The Z stage 33 is constructed in a manner such that the Z stage can be moved in the vertical direction (in the direction of the Z axis) together with the portion for holding a lens 34 held by the Z stage 33 by a conventional mechanism for vertical movement (not shown in Figs. 7 and 8). The Z stage 33 is attached to an X stage 31. The X stage 31 is disposed on a Y stage 32 in a manner such that the X stage can move freely in the X-direction on two rails 31a disposed on the Y stage 32. The movement of the X stage is controlled by rotating a screw shaft 31b by a driving pulse motor 31c. The screw shaft 31b is screwed into the X stage 31 and attached to the Y stage 32 in a manner such that the screw shaft 31b can freely rotate.

The Y stage 32 is disposed on a base table 30 in a manner such that the Y stage can freely move in the Y-direction on two rails 32a disposed on the base table 30. The movement of the Y stage is controlled by rotating a screw shaft 32b by a driving pulse motor 32c. The screw shaft 32b is screwed into the Y stage 32 and attached to the base table 30 in a manner such that the screw shaft 32b can freely rotate. The X motor 31c and the Y motor 32c are connected to the computer 6 via a controller 35.

The computer 6 controls the lens meter 4, the blocking apparatus 2 and the moving stage 3 by transmitting necessary control signals, processes information such as data of image processing and data of positions transmitted from these apparatuses, data of the shape of the spectacle frame which are obtained by an apparatus for measuring the shape of the spectacle frame (not shown in Figs. 7 and 8) or provided as input data, data of the shape of the lens holder, data of the prescription (layout) and the like other information, decides the position for attaching the lens holder and further provides necessary controls to the above apparatuses based on the results. Specifically, the computer controls the apparatuses so that the following steps S1 to S8 are performed as shown in Fig. 1.

### (Steps S1 to S2)

An uncut lens 100 supplied from an apparatus for supplying an uncut lens (not shown in Fig. 1) is held by the sucking apparatuses 34a of the portion for holding a lens 34 of the moving stage 3 (step S1). The lens is moved to the portion for the measurement of the lens meter 4 and fixed at a position decided in a manner such that the reference position of the lens meter 4 is brought at an initial position of the uncut lens 100 (step S2). As the initial position, a position approximately at the center of the uncut lens (the round lens) is selected since, when the uncut lens transferred by the apparatus for supplying an uncut lens (not shown in Fig. 1) is held by the sucking apparatuses 34a of the portion for holding a lens 34 of the moving stage 3, the above position can be easily indicated and controlled as the position for holding.

### (Step S3)

The mode of the measurement by the lens meter is selected in accordance with the type of the uncut lens which is either a progressive multifocal lens (HR) or a multifocal lens (HN) (S3).

### (Step S4)

An image of the uncut lens is input into the lens meter 4. Data of the obtained image is subjected to the image processing and the positions of the hidden marks or the position of the edge of the segment is obtained. The information processing is conducted using the data obtained by the above image processing, the data of the shape of the spectacle frame obtained by an apparatus for measuring the shape of the spectacle frame (not shown in Fig. 1) or provided as input data, the data of the shape of the lens holder, the data of the prescription (layout) and the like other information. The initial position described above is specified in relation to the optical or geometrical reference position of the shape of the spectacle frame. In this step, the thickness and the dioptric power are measured by means of the lens meter 4.

### (Step S5)

It is estimated whether the processing interference would take place or not when the lens holder would be blocked to the lens at the initial position. In other words, it is estimated whether the processing interference would take place or not under the assumption that the lens holder would be blocked to the lens at the initial position using the data of the shape of the spectacle frame, the data of the prescription and the data of the shape (the diameter) of the lens holder.

### (Steps S6 to S8)

When it is estimated in step 5 that the processing interference would not take place, the initial position is decided as the blocking position (step S6). When it is estimated in step 5 that the processing interference would take place, the blocking position is changed (step S7). Then, the uncut lens is moved to the apparatus for blocking and the blocking is conducted (step S8). For changing the blocking position, when the initial position is approximately at the center (the optical center) of the uncut lens (the round lens), the blocking position is changed to a position approximately at the geometrical center or to a desired position where the processing interference does not take place and necessary conditions as the center of processing are satisfied.

In accordance with the above embodiments of the process for attaching a lens holder to an uncut lens for a spectacle lens and the apparatus therefor, the lens holder can be attached to a position surely without processing interference even if the spectacle frame has a shape having a remarkably small size in the vertical direction. Quick operation can be achieved since the formation of the images and the measurement of the dioptric power by means of the lens meter and the operations of blocking by means of the blocking apparatus are conducted while the uncut lens is held by the sucking apparatuses of the moving stage.

### The Effect of the Invention

As described above, the effect of the invention is that the lens holder can he attached to the uncut lens at a position set at the outside of the range of processing interference when the positions of the hidden marks are derived by forming and processing the image of the uncut lens by the apparatus for image processing, the obtained positions of the hidden marks, the data of the spectacle frame obtained in advance and the data of the shape of the lens buildup area of the lens holder are processed and the lens holder is attached to the uncut lens. The range of processing interference is one where the processing interference takes place, i.e., a range where a portion of the shape of a lens buildup area of the lens holder is outside the shape of the spectacle frame and the uncut lens cannot be processed. Thus, the position outside the range of the processing interference is efficiently obtained and the lens holder can be attached to the uncut lens when the lens holder is attached to a progressive multifocal lens .

### Description of the reference numbers

2: A blocking apparatus;
3: a moving stage;
4: a lens meter;
6: a computer; and
100: an uncut lens.

## Claims

1. A method for attaching a lens holder (3, 34a, 34) to an uncut lens (100) for a spectacle lens, the lens holder (3, 34, 34a) being a jig which is attached to the uncut lens (100) in advance and used as a central axis of rotation of the uncut lens (100) in a process of grinding an edge of the uncut lens (100) using an apparatus for processing spectacle lenses under numerical control based on processing data including data of a shape of a spectacle frame, wherein
the uncut lens (100) is a progressive multifocal lens having a progressively changing dioptric power;
the progressive multifocal lens has hidden marks (103A, 103B) placed in advance at specific positions relative to a reference position in a shape of the spectacle lens, the reference position (110) being a position which is decided in advance by a design of a layout based on a prescription and is at least a position of a geometrical center (O) or a position of an optical center;
the method comprises the steps of:
projecting an image of the surface on a first side of said uncut lens (100) on a reflecting screen (464) disposed at the other side of the uncut lens (100), and bringing the image reflected by the reflecting screen (464) back to the first side of the uncut lens (100) through said uncut lens (100) and forming an image of the surface on the first side of the uncut lens (100) on a light receiving surface of an image input device (458), wherein the surface on the first side of the uncut lens (100) is a convex surface and the surface on the other side of the uncut lens (100) is a concave surface;
inputting the image formed on the light receiving surface into the image input device (458) and subjecting said image to image processing to thereby detect the hidden marks (103A and 103B) of said uncut lens (100) and to calculate the positions thereof by an apparatus for image processing (459); and
deriving a position outside a range of a processing interference by information processing of data of the positions of the hidden marks (103A, 103B) obtained as above, the data of the shape of the spectacle frame obtained in advance and data of a shape of a lens buildup area of the lens holder (3, 34a, 34) using a computer (6), deciding the derived position as a position for attaching the lens holder (3, 34a, 34) to the uncut lens (100) and attaching the lens holder at the decided position, the range of a processing interference being a range where the processing interference takes place, i.e., a range where a portion of the shape of a lens buildup area of the lens holder (3, 34a, 34) is outside the shape of the spectacle frame and the uncut lens (100) cannot be processed.

2. The method according to claim 1, wherein a reflecting sheet having a substrate coated with fine powder for increasing the reflectivity and enhancing scattering of light is laminated on the reflecting screen (464).

3. The method according to any one of claims 1 or 2, wherein said reflecting screen (464) is rotated at a high speed.

4. The method according to any one of claims 1 to 3, further comprising the steps of:
fixing the uncut lens (100) to a moving stage (3) which holds the uncut lens (100) at a fixed position, moves to a desired position in accordance with a specific control information, measures a position of itself and outputs information on the position;
forming an image of the uncut lens (100) by said apparatus for image processing (459) having a reference position (110) set at a specific position relative to the reference position of the moving stage (3) and deriving the positions of the hidden marks (103A, 103B) of the uncut lens (100) by processing the formed image;
moving the uncut lens (100) to a specific position in an apparatus for attaching a lens holder (3, 34a, 34) by the moving stage (3) so that the lens holder (3, 34a, 34) can be attached at the position in the uncut lens (100) decided as above, the reference position of the moving stage (3) and the position for attaching the lens holder (3, 34a, 34) in the uncut lens (100) being set in a specific relation in the apparatus for attaching a lens holder (3, 34a, 34), and attaching the lens holder (3, 34a, 34) to the uncut lens (100) by the apparatus for attaching a lens holder.

5. An apparatus for attaching a lens holder (3, 34a, 34) to an uncut lens (100) for a spectacle lens, the lens holder (3, 34a, 34) being a jig which is attached to the uncut lens (100) in advance and used as a central axis of rotation of the uncut lens (100) in a process of grinding an edge of the uncut lens (100) using an apparatus for processing spectacle lenses under numerical control based on processing data including data of a shape of a spectacle frame, wherein
the uncut lens (100) is a progressive multifocal lens having a progressively changing dioptric power;
the progressive multifocal lens has hidden marks (103A, 103B) placed at specific positions relative to a reference position (110) in a shape of the spectacle lens,
the reference position being a position which is decided in advance by a design of a layout based on a prescription and is at least a position of a geometrical center (O) or a position of an optical center;
the apparatus comprises:
a computer (6); the computer being formed for:
deriving a position outside a range of a processing interference by information processing of data of the positions of the hidden marks (103A, 103B), the data of the shape of the spectacle frame obtained in advance and data of a shape of a lens buildup area of the lens holder (3, 34a, 34) and for deciding the obtained position as a position for attaching the lens holder (3, 34a, 34) in the uncut lens (100), the range of a processing interference being a range where the processing interference takes place, i.e., a range where a portion of the shape of a lens buildup area of the lens holder (3, 34a, 34) is outside the shape of the spectacle frame and the uncut lens (100) cannot be processed, and
for moving the uncut lens (100) to a specific position in an apparatus for attaching a lens holder (3, 34a, 34) by the moving stage (3) so that the lens holder (3, 34a, 34) can be attached at the position in the uncut lens (100) decided as above, wherein the reference position of the moving stage (3) and the position for attaching the lens holder (3, 34a, 34) in the uncut lens (100) are set in a specific relation at the specific position in the apparatus for attaching a lens holder, and attaching the lens holder (3, 34a, 34) to the uncut lens (100) by the apparatus for attaching a lens holder;
a moving stage (3) which holds the uncut lens (100) at a fixed position, moves to a desired position in accordance with a specific control information from the computer (6), measures a position of itself and outputs information on the position to the computer (6);
an apparatus for attaching a lens holder (3, 34a, 34) in which a reference position (110) of the moving stage (3) and a position for attaching the lens holder (3, 34a, 34) in the uncut lens (100) are set in a specific relation; and
an apparatus for forming and processing an image (440) which has a reference position set at a specific position relative to a reference position of the moving stage (3) and which forms an image of the uncut lens (100) and derives the positions of the hidden marks (103A, 103B) by processing the formed image based on a command information of the computer (6);
**characterized in that**, the apparatus (440) for forming and processing an image comprises a reflecting screen (464), an image input device (458) and an image forming device (459), wherein the apparatus for forming and processing an image (440) is adapted for projecting an image of the surface on a first side of said uncut lens (100) on the reflecting screen (464) disposed at the other side of the uncut lens (100), for bringing the image reflected by the reflecting screen (464) back to the first side of the uncut lens (100) through said uncut lens (100), for forming an image of the surface on the first side of the uncut lens (100) on a light receiving surface of the image input device (458), wherein the surface on the first side of the uncut lens (100) is a convex surface and the surface on the other side of the uncut lens (100) is a concave surface, for inputting the image formed on the light receiving surface into the image input device (458) and for subjecting said image to image processing to thereby detect the hidden marks (103A and 103B) of said uncut lens (100) and to calculate the positions thereof by the image forming device (459);

6. The apparatus according to claim 5, wherein a reflecting sheet having a substrate coated with fine powder for increasing the reflectivity and enhancing scattering of light is laminated on the reflecting screen (464).

7. The apparatus according to claims 5 or 6, further comprising a motor (476) for rotating said reflecting screen (464) at a high speed.

## Patentansprüche

1. Verfahren zum Anbringen eines Linsenhalters (3, 34a, 34) an einer ungeschliffenen Linse (100) für eine Brillenglaslinse, wobei es sich bei dem Linsenhalter (3, 34, 34a) um eine Vorrichtung handelt, die vorab an der ungeschliffenen Linse (100) angebracht wird und in einem Verfahrensschritt des Beschleifens einer Kante der ungeschliffenen Linse (100) unter Verwendung einer Vorrichtung zum Verarbeiten von Brillenglaslinsen unter einer numerischen Steuerung basierend auf Verarbeitungsdaten, die Daten über eine Form eines Brillenglasrahmens beinhalten, als eine zentrale Drehachse der ungeschliffenen Linse (100) verwendet wird, wobei
es sich bei der ungeschliffenen Linse (100) um eine Gleitsicht-Mehrstärkenlinse mit einer sich progressiv verändernden dioptrischen Wirkung handelt;
die Gleitsicht-Mehrstärkenlinse verborgene Markierungen (103A, 103B) aufweist, die vorab in einer Form der Brillenglaslinse an spezifischen Positionen relativ zu einer Referenzposition angeordnet werden, wobei es sich bei der Referenzposition (110) um eine Position handelt, die vorab durch eine konstruktive Auslegung, die auf einer Verschreibung basiert, festgelegt wird, und um zumindest entweder eine Position eines geometrischen Mittelpunkts (O) oder eine Position eines optischen Mittelpunkts;
wobei das Verfahren folgende Schritte beinhaltet:
Projizieren eines Bildes der Oberfläche auf einer ersten Seite der ungeschliffenen Linse (100) auf einen reflektierenden Bildschirm (464), der an der anderen Seite der ungeschliffenen Linse (100) angeordnet ist, und Zurückholen des Bildes, das durch den reflektierenden Bildschirm (464) reflektiert wird, zur ersten Seite der ungeschliffenen Linse (100) durch die ungeschliffene Linse (100) und Erzeugen eines Bildes der Oberfläche auf der ersten Seite der ungeschliffenen Linse (100) auf einer lichtaufnehmenden Oberfläche einer Bildeingabevorrichtung (458), wobei es sich bei der Oberfläche auf der ersten Seite der ungeschliffenen Lines (100) um eine konvexe Oberfläche handelt und bei der Oberfläche auf der anderen Seite der ungeschliffenen Linse (100) um eine konkave Oberfläche handelt;
Eingeben des Bildes, das auf der lichtaufnehmenden Oberfläche ausgebildet wird, in die Bildeingabevorrichtung (458) und Ausüben einer Bildverarbeitung auf das Bild, um **dadurch** die verborgenen Markierungen (103A und 103B) der ungeschliffenen Linse (100) zu erfassen und um deren Positionen durch eine Vorrichtung zur Bildverarbeitung (459) zu berechnen; und
Herleiten einer Position außerhalb eines Bereichs einer Verarbeitungsstörung durch Informationsverarbeitung von Daten über die Position der verborgenen Markierungen (103A, 103B), die wie oben erhalten wurden, von Daten über die Form des Brillenglasrahmens, die vorab erhalten wurden, und von Daten über eine Form eines Linsenaufbaubereichs des Linsenhalters (3, 34a, 34) unter Verwendung eines Computers (6), Festlegen der hergeleiteten Position als eine Position zum Anbringen des Linsenhalters (3, 34a, 34) an der ungeschliffenen Linse (100) und Anbringen des Linsenhalters an der festgelegten Position, wobei es sich bei dem Bereich einer Verarbeitungsstörung um einen Bereich handelt, in dem eine Verarbeitungsstörung stattfindet, d.h. einen Bereich, in dem ein Teil der Form eines Linsenaufbaubereichs des Linsenhalters (3, 34a, 34) außerhalb der Form des Brillenglasrahmens liegt und die ungeschliffene Linse (100) nicht verarbeitet werden kann.

2. Verfahren nach Anspruch 1, wobei eine reflektierende Folie, die ein Substrat aufweist, das mit einem feinen Pulver zum Erhöhen des Reflexionsvermögens und zum Verbesserung einer Lichtstreuung beschichtet ist, als eine Schicht auf den reflektierenden Schirm (464) aufgebracht wird.

3. Verfahren nach einem der Ansprüche 1 oder 2, wobei der reflektierende Bildschirm (464) mit einer hohen Geschwindigkeit gedreht wird.

4. Verfahren nach einem der Ansprüche 1 bis 3, wobei das Verfahren ferner folgende Schritte beinhaltet:
Befestigen der ungeschliffenen Lines (100) an einer Bewegungsstufe (3), die die ungeschliffene Linse (100) an einer festgelegten Position hält, sich gemäß einer spezifischen Steuerinformation zu einer gewünschten Position bewegt, ihre eigene Position misst und Informationen über die Position ausgibt;
Erzeugen eines Bildes der ungeschliffenen Linse (100) durch die Bildverarbeitungsvorrichtung (459) mit einer Referenzposition (110), die an einer bestimmten Position relativ zur Referenzposition der Bewegungsstufe (3) eingestellt ist, und Herleiten der Positionen der verborgenen Markierungen (103A, 103B) der ungeschliffenen Linse (100) durch Verarbeiten des erzeugten Bildes;
Bewegen der ungeschliffenen Linse (100) an eine spezifische Position in einer Vorrichtung zum Anbringen eines Linsenhalters (3, 34a, 34) durch die Bewegungsstufe (3), so dass der Linsenhalter (3, 34a, 34) an der Position in der ungeschliffenen Linse (100), die wie oben festgelegt wurde, angebracht werden kann, wobei die Referenzposition der Bewegungsstufe (3) und die Position zum Anbringen des Linsenhalters (3, 34a, 34) in der ungeschliffenen Linse (100) in einer spezifischen Relation in der Vorrichtung zum Anbringen des Linsenhalters (3, 34a, 34) eingestellt sind, und Anbringen des Linsenhalters (3, 34a, 34) an der ungeschliffenen Linse (100) durch die Vorrichtung zum Anbringen eines Linsenhalters.

5. Vorrichtung zum Anbringen eines Linsenhalters (3, 34a, 34) an einer ungeschliffenen Linse (100) für eine Brillenglaslinse, wobei es sich bei dem Linsenhalter (3, 34a, 34) um eine Vorrichtung handelt, die an der ungeschliffenen Linse (100) vorab angebracht wird und in einem Verfahrensschritt des Schleifens einer Kante der ungeschliffenen Linse (100) unter Verwendung einer Vorrichtung zum Verarbeiten von Brillenglaslinsen unter einer numerischen Steuerung basierend auf Verarbeitungsdaten, die Daten über eine Form eines Brillenglasrahmens beinhalten, als eine zentrale Drehachse der ungeschliffenen Linse (100) verwendet wird, wobei
es sich bei der ungeschliffenen Linse (100) um eine Gleitsicht-Mehrstärkenlinse mit einer sich progressiv verändernden dioptrischen Wirkung handelt;
die Gleitsicht-Mehrstärkenlinse verborgene Markierungen (103A, 103B) aufweist, die an spezifischen Positionen relativ zu einer Referenzposition (110) in einer Form der Brillenglaslinse angeordnet sind,
es sich bei der Referenzposition um eine Position handelt, die vorab durch eine konstruktive Auslegung, die auf einer Verschreibung basiert, festgelegt wird, und es sich dabei um zumindest entweder eine Position eines geometrischen Mittelpunkts (O) oder eine Position eines optischen Mittelpunkts handelt;
die Vorrichtung aufweist:
einen Computer (6); wobei der Computer ausgelegt ist zum:
Herleiten einer Position außerhalb eines Bereichs einer Verarbeitungsstörung durch Informationsverarbeitung von Daten über die Positionen der verborgenen Markierungen (103A, 103B), den Daten über die Form des Brillenglasrahmens, die vorab erhalten wurden, und den Daten über eine Form eines Linsenaufbaubereichs des Linsenhalters (3, 34a, 34), und zum Festlegen der erhaltenen Position als eine Position zum Anbringen des Linsenhalters (3, 34a, 34) in der ungeschliffenen Linse (100), wobei es sich bei dem Bereich einer Verarbeitungsstörung um einen Bereich handelt, in dem die Verarbeitungsstörung stattfindet, d. h. einen Bereich, in dem eine Position der Form eines Linsenaufbaubereichs des Linsenhalters (3, 34a, 34) außerhalb der Form des Brillenglasrahmens liegt und die ungeschliffene Linse (100) nicht verarbeitet werden kann, und
zum Bewegen der ungeschliffenen Linse (100) an eine spezifische Position in einer Vorrichtung zum Anbringen eines Linsenhalters (3, 34a, 34) durch die Bewegungsstufe (3), so dass der Linsenhalter (3, 34a, 34) an der Position in der ungeschliffenen Linse (100), die wie oben festgelegt wurde, angebracht werden kann, wobei die Referenzposition der Bewegungsstufe (3) und die Position zum Anbringen des Linsenhalters (3, 34a, 34) in der ungeschliffenen Linse (100) in einer spezifischen Relation an der spezifischen Position in der Vorrichtung zum Anbringen eines Linsenhalters eingestellt sind, und Anbringen des Linsenhalters (3, 34a, 34) an der ungeschliffenen Linse (100) durch die Vorrichtung zum Anbringen eines Linsenhalters;
eine Bewegungsstufe (3), die die ungeschliffene Linse (100) an einer feststehenden Position hält, sich zu einer gewünschten Position gemäß einer spezifischen Steuerinformation vom Computer (6) bewegt, eine Position von sich selbst misst und Informationen über die Position an den Computer (6) ausgibt;
eine Vorrichtung zum Anbringen eines Linsenhalters (3, 34a, 34), in der eine Referenzposition (110) der Bewegungsstufe (3) und eine Position zum Anbringen des Linsenhalters (3, 34a, 34) in der ungeschliffenen Linse (100) in einer spezifischen Relation eingestellt sind; und
eine Vorrichtung zum Erzeugen und Verarbeiten eines Bildes (440), die eine Referenzposition aufweist, die an einer spezifischen Position relativ zu einer Referenzposition der Bewegungsstufe (3) eingestellt ist und die ein Bild der ungeschliffenen Linse (100) erzeugt und die Positionen der verborgenen Markierungen (103A, 103B) durch Verarbeitung des erzeugten Bildes basierend auf einer Befehlsinformation des Computers (6) herleitet;
**dadurch gekennzeichnet, dass**
die Vorrichtung (440) zum Erzeugen und Verarbeiten eines Bildes einen reflektierenden Bildschirm (464), eine Bildeingabevorrichtung (458) und eine Bilderzeugungsvorrichtung (459) aufweist, wobei die Vorrichtung zum Erzeugen und Verarbeiten eines Bildes (440) in der Lage ist zum Projizieren eines Bildes von der Oberfläche auf einer ersten Seite der ungeschliffenen Linse (100) auf den reflektierenden Bildschirm (464), der an der anderen Seite der ungeschliffenen Linse (100) angeordnet ist, zum Zurückholen des Bildes, das durch den reflektierenden Bildschirm (464) reflektiert wird, auf die erste Seite der ungeschliffenen Linse (100) durch die ungeschliffene Linse (100) hindurch, zum Erzeugen eines Bildes der Oberfläche auf der ersten Seite der ungeschliffenen Linse (100) auf einer lichtaufnehmenden Oberfläche der Bildeingabevorrichtung (458), wobei es sich bei der Oberfläche auf der ersten Seite der ungeschliffenen Linse (100) um eine konvexe Oberfläche handelt, und bei der Oberfläche auf der anderen Seite der ungeschliffenen Linse (100) um eine konkave Oberfläche handelt, zum Eingeben des Bildes, das auf der lichtaufnehmenden Oberfläche erzeugt wurde, in die Bildeingabevorrichtung (458) und zum Ausüben einer Bildverarbeitung auf das Bild, um **dadurch** die verborgenen Markierungen (103A und 103B) der ungeschliffenen Linse (100) zu erfassen und die Positionen derselben durch die Bilderzeugungsvorrichtung (459) zu berechnen;

6. Vorrichtung nach Anspruch 5, wobei eine reflektierende Folie, die ein Substrat aufweist, das mit feinem Pulver zum Erhöhen des Reflexionsvermögens und zum Verbessern einer Lichtstreuung beschichtet ist, als eine Schicht auf den reflektierenden Bildschirm (464) aufgebracht ist.

7. Vorrichtung nach den Ansprüchen 5 oder 6, die ferner einen Motor (476) zum Drehen des reflektierenden Bildschirms (464) mit einer hohen Geschwindigkeit aufweist.

## Revendications

1. Procédé pour fixer un porte-verre (3, 34a, 34) sur un verre non taillé (100) pour un verre de lunette, le porte-verre (3, 34, 34a) étant un gabarit qui est fixé sur le verre non taillé (100) à l'avance et utilisé en tant qu'axe central de rotation du verre non taillé (100) lors d'un procédé de meulage d'un bord du verre non taillé (100) en utilisant un appareil pour traiter les verres de lunette sous contrôle numérique basé sur des données de traitement comprenant des données d'une forme d'une monture de lunette, dans lequel :
le verre non taillé (100) est un verre à foyer progressif ayant une puissance dioptrique changeant progressivement ;
le verre à foyer progressif a des marques dissimulées (103A, 103B) placées à l'avance dans des positions spécifiques par rapport à une position de référence selon une forme du verre de lunette, la position de référence (110) étant une position qui est décidée à l'avance par une conception d'un agencement basé sur une prescription et est au moins une position d'un centre géométrique (O) ou une position d'un centre optique ;
le procédé comprenant les étapes consistant à :
projeter une image de la surface d'un premier côté dudit verre non taillé (100) sur un écran réfléchissant (464) disposé de l'autre côté du verre non taillé (100), et ramener l'image réfléchie par l'écran réfléchissant (464) vers le premier côté du verre non taillé (100) à travers ledit verre non taillé (100) et former une image de la surface du premier côté du verre non taillé (100) sur une surface de réception de lumière d'un dispositif d'entrée d'image (458), dans lequel la surface du premier côté du verre non taillé (100) est une surface convexe et la surface de l'autre côté du verre non taillé (100) est une surface concave ;
introduire l'image formée sur la surface de réception de lumière dans le dispositif d'entrée d'image (458) et soumettre ladite image au traitement d'image pour détecter ainsi les marques dissimulées (103A et 103B) dudit verre non taillé (100) et pour calculer leurs positions par un appareil pour le traitement d'image (459) ; et
dériver une position hors d'une plage d'une interférence de traitement en traitant les informations de données des positions des marques dissimulées (103A, 103B) obtenues comme ci-dessus, les données de la forme de la monture de lunette obtenues à l'avance et les données d'une forme d'une zone de surépaisseur de verre du porte-verre (3, 34a, 34) en utilisant un ordinateur (6), décider la position dérivée en tant que position pour fixer le porte-verre (3, 34a, 34) sur le verre non taillé (100) et fixer le porte-verre à la position décidée, la plage d'une interférence de traitement étant une plage où l'interférence de traitement a lieu, c'est-à-dire une plage où une partie de la forme d'une zone d'accumulation de verre du porte-verre (3, 34a, 34) est hors de la forme de la monture de lunette et le verre non taillé (100) ne peut pas être traité.

2. Procédé selon la revendication 1, dans lequel une feuille réfléchissante ayant un substrat recouvert d'une poudre fine pour augmenter la réflectivité et améliorer la diffusion de la lumière est déposée en couche sur l'écran réfléchissant (464).

3. Procédé selon l'une quelconque des revendications 1 ou 2, dans lequel ledit écran réfléchissant (464) est mis en rotation à grande vitesse.

4. Procédé selon l'une quelconque des revendications 1 à 3, comprenant en outre les étapes consistant à :
fixer le verre non taillé (100) sur une platine mobile (3) qui maintient le verre non taillé (100) dans une position fixe, qui se déplace dans une position souhaitée selon une information de commande spécifique, qui mesure sa propre position et qui transmet une information sur la position ;
former une image du verre non taillé (100) avec ledit appareil de traitement d'image (459) ayant une position de référence (110) déterminée dans une position spécifique par rapport à la position de référence de la platine mobile (3) et dériver les positions des marques dissimulées (103A, 103B) du verre non taillé (100) en traitant l'image formée ;
déplacer le verre non taillé (100) dans une position spécifique dans un appareil pour fixer un porte-verre (3, 34a, 34) par la platine mobile (3) de sorte que le porte-verre (3, 34a, 34) peut être fixé dans la position dans le verre non taillé (100) décidée comme ci-dessus, la position de référence de la platine mobile (3) et la position pour fixer le porte-verre (3, 34a, 34) dans le verre non taillé (100) étant déterminée dans une relation spécifique dans l'appareil pour fixer un porte-verre (3, 34a, 34), et fixer le porte-verre (3, 34a, 34) sur le verre non taillé (100) avec l'appareil pour fixer un porte-verre.

5. Appareil pour fixer une porte-verre (3, 34a, 34) sur un verre non taillé (100) pour un verre de lunette, le porte-verre (3, 34a, 34) étant un gabarit qui est fixé sur le verre non taillé (100) à l'avance et utilisé en tant qu'axe central de rotation du verre non taillé (100) lors d'un procédé de meulage d'un bord du verre non taillé (100) en utilisant un appareil pour traiter des verres de lunette sous contrôle numérique en fonction de données de traitement comprenant les données d'une forme d'une monture de lunette, dans lequel :
le verre non taillé (100) est un verre à foyer progressif ayant une puissance dioptrique changeant progressivement ;
le verre à foyer progressif a des marques dissimulées (103A, 103B) placées à des positions spécifiques par rapport à une position de référence (110) selon une forme du verre de lunette,
la position de référence étant une position qui est décidée à l'avance par une conception d'un agencement basé sur une prescription et est au moins une position d'un centre géométrique (O) ou une position d'un centre optique ;
l'appareil comprend :
un ordinateur (6) ; l'ordinateur étant formé pour :
dériver une position hors d'une plage d'une interférence de traitement en traitant des informations de données des positions des marques dissimulées (103A, 103B), les données de la forme de la monture de lunette étant obtenues à l'avance et les données d'une forme d'une zone de surépaisseur de verre du porte-verre (3, 34a, 34) et pour décider la position obtenue en tant que position pour fixer le porte-verre (3, 34a, 34) dans le verre non taillé (100), la plage d'une interférence de traitement étant une plage où l'interférence de traitement a lieu, c'est-à-dire une plage où une partie de la forme d'une zone de surépaisseur de verre du porte-verre (3, 34a, 34) est hors de la forme de la monture de lunette et le verre non taillé (100) ne peut pas être traité, et pour
déplacer le verre non taillé (100) dans une position spécifique dans un appareil pour fixer un porte-verre (3, 34a, 34) par la platine mobile (3) de sorte que le porte-verre (3, 34a, 34) peut être fixé dans la position dans le verre non taillé (100) décidée ci-dessus, dans lequel la position de référence de la platine mobile (3) et la position pour fixer le porte-verre (3, 34a, 34) dans le verre non taillé (100) sont déterminées dans une relation spécifique dans la position spécifique dans l'appareil pour fixer un porte-verre, et fixer le porte-verre (3, 34a, 34) sur le verre non taillé (100) avec l'appareil pour fixer un porte-verre ;
une platine mobile (3) qui maintient le verre non taillé (100) dans une position fixe, qui se déplace dans une position souhaitée selon une information de commande spécifique provenant de l'ordinateur (6), qui mesure sa propre position et qui transmet l'information sur la position à l'ordinateur (6) ;
un appareil pour fixer un porte-verre (3, 34a, 34) dans lequel une position de référence (110) de la platine mobile (3) et une position pour fixer le porte-verre (3, 34a, 34) dans le verre non taillé (100) sont déterminées selon une relation spécifique ; et
un appareil pour former et traiter une image (440) qui a une position de référence déterminée dans une position spécifique par rapport à une position de référence de la platine mobile (3) et qui forme une image du verre non taillé (100) et dérive les positions des marques dissimulées (103A, 103B) en traitant l'image formée en fonction d'une information de commande de l'ordinateur (6) ;
**caractérisé en ce que :**
l'appareil (440) pour former et traiter une image comprend un écran réfléchissant (464), un dispositif d'entrée d'image (458) et un dispositif de formation d'image (459), dans lequel l'appareil pour former et traiter une image (440) est adapté pour projeter une image de la surface sur un premier côté dudit verre non taillé (100) sur l'écran réfléchissant (464) disposé de l'autre côté du verre non taillé (100) pour ramener l'image réfléchie par l'écran réfléchissant (464) sur le premier côté du verre non taillé (100) à travers ledit verre non taillé (100), pour former une image de la surface sur le premier côté du verre non taillé (100) sur une surface de réception de lumière du dispositif d'entrée d'image (458), dans lequel la surface du premier côté du verre non taillé (100) est une surface convexe et la surface de l'autre côté du verre non taillé (100) est une surface concave, pour introduire l'image formée sur la surface de réception de lumière dans le dispositif d'entrée d'image (458) et pour soumettre ladite image au traitement d'image afin de détecter ainsi les marques dissimulées (103A et 103B) dudit verre non taillé (100) et pour calculer leurs positions par le dispositif de formation d'image (459).

6. Appareil selon la revendication 5, dans lequel une feuille réfléchissante ayant un substrat recouvert avec une poudre fine pour augmenter la réflectivité et augmenter la diffusion de lumière est déposée en couche sur l'écran réfléchissant (464).

7. Appareil selon les revendications 5 ou 6, comprenant en outre un moteur (476) pour mettre en rotation ledit écran réfléchissant (464) à grande vitesse.
